Europäisches Patentamt

European Patent Office

Office européen des brevets

(19)

(11) Publication number: **0 460 871 A2**

# (12) EUROPEAN PATENT APPLICATION

(21) Application number: 91304905.2

(22) Date of filing: 30.05.91

(51) Int. Cl.⁵: **G06F 15/70**

(30) Priority: 05.06.90 GB 9012554

(43) Date of publication of application:
11.12.91 Bulletin 91/50

(84) Designated Contracting States:
AT BE CH DE DK ES FR GR IT LI LU NL SE

(71) Applicant: GEC-MARCONI LIMITED
The Grove, Warren Lane
Stanmore, Middlesex HA7 4LY (GB)

(72) Inventor: Veck, Nicholas John
29 Barley Way, Stanway
Colchester, Essex, CO3 5YD (GB)
Inventor: Rye, Anthony John
Clandine House, Sandford Mill Road
Chelmsford, Essex, CM2 6SA (GB)
Inventor: Brown, Lucinda
103 The Street, Little Waltham
Chelmsford, Essex (GB)
Inventor: Conway, Jacquline
40 Riffhams Drive, Great Baddow
Chelmsford, Essex (GB)

(74) Representative: Cockayne, Gillian et al
GEC Patent Department, GEC Marconi
Limited, West Hanningfield Road
Great Baddow, Chelmsford Essex CM2 8HN
(GB)

(54) Determination of a crop parameter.

(57) This invention relates to apparatus comprising means 1, 3 and 6 for obtaining a remotely sensed image of an area of land 4 comprising regions 5 having a substantially homogeneous parameter such as crop type, and means 8 for using information obtained from this image in conjunction with vegetation growth models, to classify a region 5 in terms of a selected parameter.

EP 0 460 871 A2

FIG.1

This invention relates to a method and apparatus for determining one or more parameters of a crop and in particular but not exclusively to a method and apparatus employing a remotely sensed image of a crop for which a parameter is to be determined.

It is desirable to be able to determine a parameter of a crop, for example type or growth, to enable predictions to be made as to the amount of product of such a crop that will be available on the market at a future date. Such predictions can be of great importance, for example failure of the wheat crop in the USA or the USSR would greatly effect the economy of those countries. In third world countries failure of a staple crop could lead to a famine.

Determination of the percentages of a certain crop type being grown and the likely quantity of product from such a crop is also very important when considering large scale agricultural management, for example the common agricultural policy in Europe. It is essential for effective management on this scale, to be able to monitor the aforementioned parameters over a short period of time relative to crop growth.

One way presently employed of obtaining information about crop type is to conduct surveys by questioning the people responsible for planting the crops. However this suffers from problems of slow return of results, and great expense. Furthermore the delay in obtaining and processing the results of such a survey limits the value of the results. When monitoring on an international scale a further obstacle is encountered in that certain countries do not wish to release figures for various political reasons.

More recently, improvements in performance, and reduction in costs of remote sensing of landmasses on a large scale, either by high altitude aircraft surveys or more commonly by satellite observations, have made it viable to use the images obtained from such surveys to monitor crop parameters. It has been found that the most practical way of carrying out such observations is to project microwave energy at a target area and use the backscatter from the earth's surface to produce an image. The intensity of backscatter from the surface being dependent, at least in part, on the parameters of a crop in any specific region imaged. However although radiation of different frequencies and different polarisation angles can be used to "illuminate" the target the only useful information that can be obtained at present is the variation in intensity of the image.

At present, in order to interpret an image generated in the above manner it is necessary for part of the image, or a similar image taken of another area, to include a region having a known crop parameter from which other similar areas of the image could be classified. Alternatively a land survey is conducted of one of the regions having a certain intensity in order to identify a crop parameter, and again all areas of that intensity are then classified as constituting a crop having that particular parameter. The above method of interpretation of the image, often referred to as supervised classification, is not always convenient especially if the crop being monitored is on foreign territory.

It is an object of the present invention to provide a method and apparatus for overcoming at least in part the aforementioned problems. According to the first aspect of the invention there is provided a method of determining a parameter of a crop comprising: obtaining an image of an area of land; identifying a region of the image having a substantially uniform intensity and determining that intensity; using the output from a growth model of a crop type to obtain an expected image intensity value; and comparing the image value with the expected value in order to determine a parameter of the crop.

In a second aspect the invention provides apparatus for determining a parameter of a crop comprising: means for obtaining an image of an area of land; means for identifying a region of the image having a substantially uniform intensity and determining that intensity; means for using an output from a growth model of a crop type to obtain an expected image intensity value; and means for comparing the image value with the expected value in order to determine a parameter of the crop.

By comparing the intensity of a region of an image with the expected intensity value obtained from a growth model it is possible to determine a parameter of the crop without the need to obtain prior information from that region about that crop.

Means for obtaining an image of an area of land includes means for obtaining image data and also means for receiving data that has been derived from an image of an area of land.

Preferably the image obtained is of backscattered microwave radiation, for such backscatter is particularly dependent on the vegetation type from which the backscattering occurs.

Advantageously the image is obtained from an aircraft or satellite in a manner commonly referred to as remote sensing. In this manner a large area of landmass may be imaged at any one time. Preferably the growth model takes into account the results of image intensity values previously obtained for crops having at least one known parameter, thereby enabling the growth model to be adapted and improved from a knowledge of previous results obtained from previous surveys.

Advantageously at least one image is obtained of at least one area including a plurality of regions, and after an interval of time a further image is obtained of the area and the intensity values of different regions within the area are compared with respect to time. By making such comparisons it is possible to fit models to different regions by comparing the respective growth rates from the models with the varying intensities of the different regions. This is possible because different crops grow at different rates, and therefore the intensity of an image of a crop varies depending on stage of growth of that crop. By comparing the different growth rates with time of each of the regions imaged, it is possible to either confirm or reject growth models which have been assigned to different regions enabling a complete picture to eventually be built up of the different crop types of each region.

One embodiment of the invention will now be described by way of example only with reference to the accompanying figures, of which;

Figure 1 is a schematic illustration of apparatus in accordance with the invention; and

Figure 2 is a diagrammatic representation of the functions performed by the apparatus of Figure 1 and the inputs and outputs from that apparatus.

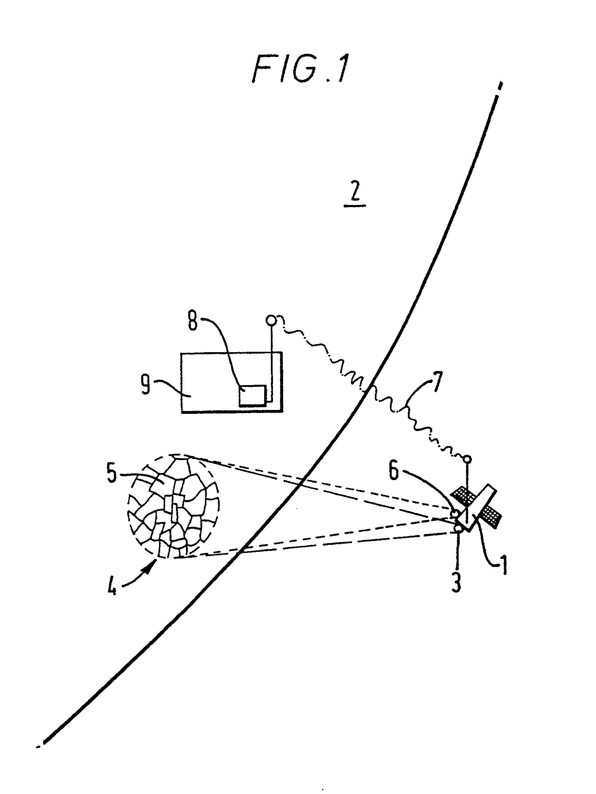

With reference to Figure 1 there is shown a satellite 1 orbiting the earth 2. The satellite carries a microwave source 3 which "illuminates" an area 4 on the surface of the earth 2 comprising a plurality of regions 5 each of a homogeneous crop type. Backscattered radiation from the area 4 is detected by receiver 6. The received radiation is converted to a desired format so that image information may be sent via radio link 7 to a computer 8 in a base station 9 on the earth 2.

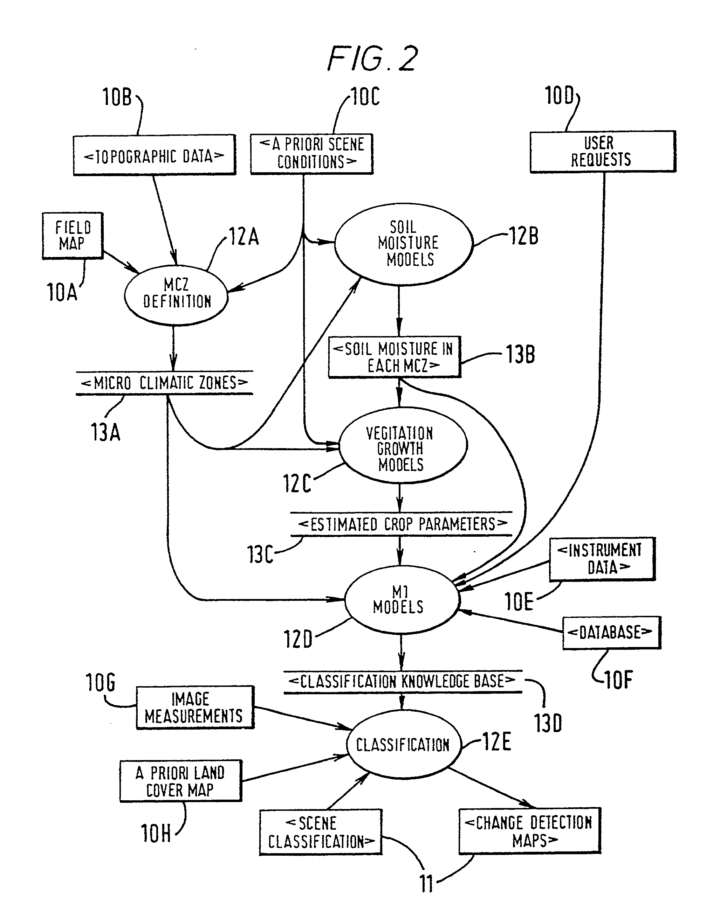

With reference to Figure 2 there is indicated the various inputs 10, outputs 11, processes 12 and data stores 13 associated with the computer 8 of Figure 1.

An area imaged from the satellite 1 of Figure 1 is divided in to micro climatic zones (MCZ) by the MCZ definition process 12A which utilises data from field maps 10A, topographic data 10B and a priori scene conditions 10C. As with all the processes carried out in the computer if a priori scene conditions are available the process will use these conditions alone to generate an output. When a priori scene conditions are not available, modelling techniques are employed using data from other sources. The micro climatic zones comprise regions of the imaged area having homogeneous or similar environmental conditions. These are stored in the micro climatic zone data store 13A for recall for use in further processes. The micro climatic zone data store 12A is accessed by the soil moisture modelling process 12B which utilises this data, or a priori scene conditions if available, to predict the soil moisture content in each MCZ and to transfer these values to the soil moisture data store 13B.

Data from the soil moisture data store 13B is utilised by the vegetation growth model process 12C with data from the micro climatic zone data store 13A and a priori scene conditions, if available, to generate estimated crop parameters which are transferred to the store 13C.

At the request of a user 10D to determine certain characteristics of a region that is being imaged, data from the above mentioned stores is combined with input data about the instruments generating the image and information from a data base 10F comprising results obtained from any previous classification of the imaged region, if available, in a microwave interaction (MI) modelling process 12D. This generates a classification knowledge base data store 13D, comprising expected intensity values for any crop or parameter which the user has requested to be surveyed. These values are compared by a classification process 12E with the intensity of the regions of the image obtained from input 10G and a priori land cover knowledge, if available, from input 10H to classify a region of the image scene. Alternatively the classification process 12E may function to detect changes from an earlier mapping of the scene, dependent upon user request and whether an earlier map is available.

## Claims

1. Apparatus for determining a parameter of a crop comprising: means for obtaining an image of an area of land; means for identifying a region of the image having a substantially uniform intensity and assigning a value to that intensity; means for using the output from a growth model of a crop type to obtain an expected image intensity value; and means for comparing the image value with the expected value in order to determine a parameter of the crop.

2. Apparatus as claimed in claim 1 wherein the means for obtaining an image is adapted to obtain an image of backscattered microwave radiation.

3. Apparatus as claimed in claim 1 or 2 wherein the means for obtaining an image is mounted on a satellite.

4. Apparatus as claimed in claim 1 or 2 wherein the means for obtaining an image is mounted on an aircraft.

5. Apparatus as claimed in any preceding claim including means for generating a growth model comprising means for receiving data relating to one of the group of parameters comprising crop type, growth rate, climate, terrain, soil type, weather.

6. Apparatus as claimed in any preceding claim wherein the growth model uses the results of image intensity values obtained for crops having at least one known parameter.

7. Apparatus as claimed in any preceding claim comprising means for obtaining at least one image of at least one area including a plurality of regions and obtaining after an interval of time a further image of the area, and means for comparing the intensity values of different regions within the area with respect to time.

8. Apparatus as claimed in any preceding claim comprising means for generating further growth models using at least in part the intensity values for regions of images previously obtained.

9. Apparatus as claimed in any preceding claim comprising means for determining a micro climatic zone of an area imaged, means for using at least in part the micro climatic zone to predict soil moisture content for a region, means for using at least in part the micro climatic zone and soil moisture content of a region to generate a growth model of a crop, means for using the growth model to predict a parameter of a crop, means for using the predicted parameter with data of the type of image obtaining means to obtain an expected image intensity value, and means for comparing the image value with the expected image value in order to determine a parameter of a crop.

10. Apparatus employing a method as illustrated in and described with reference to the drawing.

11. A method of determining a parameter of a crop comprising: obtaining an image of an area of land identifying a region of the image having a substantially uniform intensity and determining that intensity; using the output from a growth model of a crop type to obtain an expected image intensity value; and comparing the image value with the expected value in order to determine a parameter of the crop.

12. A method as claimed in claim 11 wherein the image obtained is of backscattered microwave radiation.

13. A method as claimed in claim 11 or 12 wherein the image is obtained from a satellite.

14. A method as claimed in claim 11 or 12 wherein the image is obtained from an aircraft.

15. A method as claimed in any one of claims 11 to 14 wherein the growth model is formulated with regard to at least one of the group of parameters comprising crop type, growth rate, climate, terrain, soil type, weather.

16. A method as claimed in any one of claims 11 to 15 wherein the growth model takes into account the results of image intensity values obtained for crops having at least one known parameter.

17. A method as claimed in any one of claims 11 to 16 comprising obtaining at least one image of at least one area including a plurality of regions, obtaining after an interval of time a further image of the area, and comparing the intensity values of different regions within the area with respect to time.

18. A method as claimed in any one of claims 11 to 17 wherein intensity values for regions of an image are used to generate further growth models.

19. A method as claimed in any one of claims 11 to 18 comprising determining a micro climatic zone of an area imaged, using, at least in part, the micro climatic zone to predict soil moisture content for a region, using at least in part the micro climatic zone and soil moisture content of a region to generate a growth model of a crop, using the growth model to predict a parameter of a crop, using the predicted parameter with a knowledge of the imaging apparatus used to obtain the image to obtain an expected image intensity value, and comparing the image value with the expected image value in order to determine a parameter of a crop.

FIG.1

## FIG. 2